# EUROPEAN PATENT APPLICATION

(11) **EP 4 524 760 A1**
(43) Date of publication of application: **19.03.2025**
(21) Application number: 24198524.1
(22) Date of filing: 04.09.2024
(51) Int. Cl.: G06F 13/42, G06F 11/30

(54) **MEMORY ALLOCATION**

(30) Priority: 13.09.2023 CN 202311188376
(71) Applicant: New H3C Information Technologies Co., Ltd., Hangzhou, Zhejiang 310056 (CN)
(72) Inventor: YU, Yinting, Beijing (CN)
(74) Representative: Bandpay & Greuter

(57) **Abstract**

Embodiments of the present disclosure provide a method and apparatus for memory allocation, a network manager, and a storage medium, relating to the field of communication technologies and applying to network managers. The method includes: determining a first memory device among memory devices allocated to a host, where the first memory device is overloaded; selecting a second memory device from memory devices not bound to any host, where an attribute of the second memory device is superior to the attribute of the first memory device; allocating the second memory device to the host, so that the host migrates memory data from the first memory device to the second memory device.

## Description

### TECHNICAL FIELD

The present disclosure relates to the field of communication technologies, and particularly to a method and apparatus for memory allocation, a network manager and a storage medium.

### BACKGROUND

In a compute express link (CXL) network architecture, for a memory device allocated to a host, the host detects a memory load status of the memory device through a quality of service (QOS) telemetry function, and adjusts a host's request rate limit based on the memory load status. For example, in response to the memory load status is overloaded, the host reduces the request rate limit for the memory device. The memory device may be a single logical device (SLD) or a multiple logical device (MLD). In actual applications, simply adjusting the host's request rate limit alone may not solve memory overload problems.

### SUMMARY

Embodiments of the present disclosure aims to provide a memory allocation method and apparatus, a network manager and a storage medium to solve the problem of memory overload. The specific technical solution is as follows.

In a first aspect, an embodiment of the present disclosure provides a memory allocation method, which is performed by a network manager, including:
determining a first memory device among memory devices allocated to a host, where the first memory device is overloaded;
selecting a second memory device from memory devices not bound to any host, where an attribute of the second memory device is superior to the attribute of the first memory device; and
allocating the second memory device to the host, so that the host migrates memory data from the first memory device to the second memory device.

In some embodiments, determining the first memory device among the memory devices allocated to the host includes:
for each of the memory devices allocated to the host,
obtaining a request frequency of the memory device from the memory device;
obtaining a dynamic load status and bandwidth information of the memory device from the host; and
determining the first memory device based on the request frequency, the dynamic load status, and the bandwidth information of each of the memory devices allocated to the host.

In some embodiments, where each of the memory devices includes a first counter and a second counter, the first counter records a difference between a number of memory requests received by the memory device from the host and a number of memory responses sent by the memory device to the host, and the second counter records the number of memory requests;
where, obtaining the request frequency of the memory device from the memory device includes:
obtaining values recorded in the first counter and the second counter of the memory device as the request frequency of the memory device.

In some embodiments, the attribute includes one or more of latency and bandwidth.

In some embodiments, the attribute includes the latency;
where selecting the second memory device from the memory devices not bound to any host includes:
selecting, based on a topology of a compute express link (CXL) network and from the memory devices not bound to any host, a second memory device which has a lowest communication latency with the host.

In some embodiments, the first memory device is connected to a first compute express link (CXL) switch, the second memory device is connected to a second CXL switch, the first CXL switch and the second CXL switch are cascaded, and a higher-level CXL switch in the first CXL switch and the second CXL switch is connected to the host.

In a second aspect, an embodiment of the present disclosure provides a memory allocation apparatus, which is applied to a network manager, including:
a determination unit, configured to determine a first memory device among memory devices allocated to a host, where the first memory device is overloaded;
a selection unit, configured to select a second memory device from memory devices not bound to any host, where an attribute of the second memory device is superior to the attribute of the first memory device; and
an allocation unit, configured to allocate the second memory device to the host, so that the host migrates memory data from the first memory device to the second memory device.

In some embodiments, the determination unit is specifically configured to:
for each of the memory devices allocated to the host,
obtain a request frequency of the memory device from the memory device;
obtain a dynamic load status and bandwidth information of the memory device from the host; and
determine the first memory device based on the request frequency, the dynamic load status, and the bandwidth information of each of the memory devices allocated to the host.

In some embodiments, each of the memory devices includes a first counter and a second counter, the first counter records a difference between a number of memory requests received by the memory device from the host and a number of memory responses sent by the memory device to the host, and the second counter records the number of memory requests;
the determination unit is specifically configured to:
obtain values recorded in the first counter and the second counter of the memory device as the request frequency of the memory device.

In some embodiments, the attribute includes one or more of latency and bandwidth.

In some embodiments, the attribute includes the latency;
the selection unit is specifically configured to:
select, based on a topology of a compute express link (CXL) network and from the memory devices not bound to any host, a second memory device which has a lowest communication latency with the host.

In some embodiments, the first memory device is connected to a first compute express link (CXL) switch, the second memory device is connected to a second CXL switch, the first CXL switch and the second CXL switch are cascaded, and a higher-level CXL switch in the first CXL switch and the second CXL switch is connected to the host.

In a third aspect, an embodiment of the present disclosure provides a network manager, which is performed by a network manager, including: a processor and a machine-readable storage medium, where the machine-readable storage medium stores machine-executable instructions executable by a processor, and the processor is prompted by the machine-executable instructions to implement the method steps described in any one of the first aspects.

In a fourth aspect, an embodiment of the present disclosure provides a computer-readable storage medium, in which a computer program is stored, and when the computer program is executed by a processor, the method steps described in any one of the first aspects are realized.

In yet another embodiment provided by the present disclosure, there is also provided a computer program product including instructions, which, when run on a computer, causes a computer to perform the method steps described in any one of the above first aspects.

Beneficial effects of the embodiments of the present disclosure:

In the technical solution provided in the present disclosure, in response to determine that one memory device (the first memory device) of the host is overloaded, the network manager selects a more superior memory device, namely the second memory device, from the numerous memory devices not bound to any host and replaces the first memory device with the second memory device for allocation to the host. Since the host uses the second memory device with better attributes than the first memory device, the problem of overload in the first memory device is fundamentally resolved.

Of course, implementing any product or method of the present disclosure does not necessarily require achieving all the advantages described above simultaneously.

### BRIEF DESCRIPTION OF THE DRAWINGS

In order to provide a clearer explanation of the embodiments of the present disclosure, the following will briefly introduce the accompanying drawings required for the description of the embodiments. It is obvious that the accompanying drawings described below are only some embodiments of the present disclosure. For those skilled in the art, other embodiments can further be obtained based on these accompanying drawings.
FIG. 1 is a schematic diagram of a CXL network architecture.
FIG. 2 is another schematic diagram of a CXL network architecture.
FIG. 3 is a schematic diagram of a memory allocation method according to an embodiment of the present disclosure.
FIG. 4 is a schematic diagram of a CXL network architecture according to an embodiment of the present disclosure.
FIG. 5 is another schematic diagram of a memory allocation method according to an embodiment of the present disclosure.
FIG. 6 is another schematic diagram of a memory allocation method according to an embodiment of the present disclosure.
FIG. 7a is a schematic diagram of a network architecture according to an embodiment of the present disclosure.
FIG. 7b is another schematic diagram of a network architecture according to an embodiment of the present disclosure.
FIG. 8 is a schematic diagram of device migration according to an embodiment of the present disclosure.
FIG. 9 is a schematic diagram of a memory allocation apparatus according to an embodiment of the present disclosure.
FIG. 10 is a structural schematic diagram of a network manager according to an embodiment of the present disclosure.

### DETAILED DESCRIPTION

A clear and complete description of the technical solution in the embodiments of the present disclosure will be provided in conjunction with the accompanying drawings in the embodiments. It is evident that the described embodiments are merely a part of the embodiments of the present disclosure, and not all of them. Based on the embodiments in the present disclosure, all other embodiments obtained by ordinary technicians in the field based on the present disclosure fall within the scope of protection of the present disclosure.

For ease of understanding, the terms appearing in the embodiments of the present disclosure will be explained below.

Compute Express Link (CXL): An interconnect designed for memory expansion, heterogeneous computing, and system resource disaggregation. It is a technology that achieves high-bandwidth, low-latency links between hosts (such as CPUs) and devices (such as memory accelerators). Depolymerization using CXL provides efficient resource sharing and pooling, while maintaining low latency and high bandwidth through cache-coherent load-store semantics.

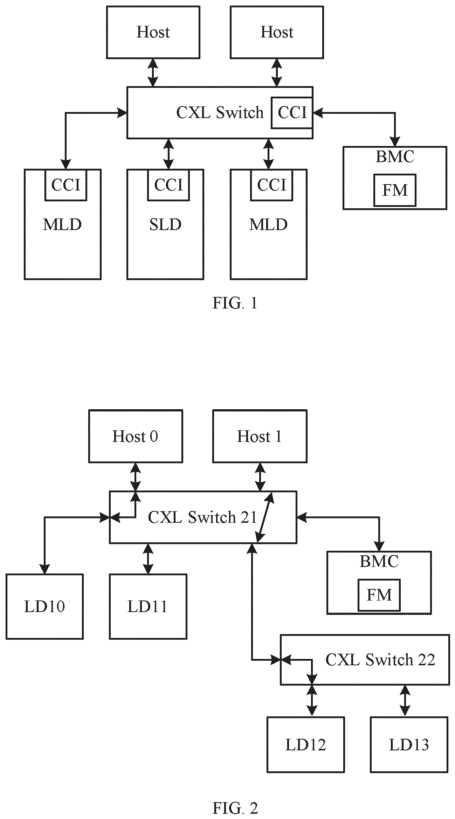

Fabric Management (FM) for CXL: Application logic responsible for system composition and resource allocation. FM may be embedded in a firmware of devices such as CXL switches, may reside on a host, or may run in a Baseboard Management Controller (BMC). As shown in FIG. 1's CXL network architecture, FM runs in the BMC, and the CXL Fabric Management (or named as CXL Fabric Manager) can be abbreviated as a Fabric Manager or a network manager.

Logical Device (LD): Carries a Just Bundle of Memory (JBOM), implementing a memory pool such as a Double Data Rate (DDR5) pool. A CXL network includes SLDs and MLDs. Resources of an SLD cannot be partitioned, and resources of an MLD can be divided into 16 independent LDs. FM manages SLDs and MLDs by programming a Command Control Interface (CCI).

CCI: Physically resides directly on components such as switches and LDs, serving as Peripheral Component Interconnect Express (PCIE) memory mapping Input/Output (MMIO) space or as a Management Component Transport Protocol (MCTP) Endpoint (EP), allowing commands to be sent, status reported, and responses read. A specific CXL network architecture is shown in FIG. 1.

In the CXL network architecture, for a memory device allocated to a host, the host uses a Quality of Service (QOS) telemetry function to detect a memory load status of the memory device and adjusts a host's request rate limit based on the memory load status. For example, in response to determine that the memory load status is overloaded, the host's request rate limit for that memory device is reduced. The memory device can be an SLD or an MLD.

In practical applications, simply adjusting the host's request rate limit cannot resolve issues such as memory overload. To address memory overload, embodiments of the present disclosure provide a memory allocation method applicable to both cascaded and non-cascaded scenarios. In non-cascaded scenarios, a CXL network architecture is as shown in FIG. 1, with one or more devices, including SLDs and MLDs, connected to a single CXL switch. In cascaded scenarios, one or more devices and one or more CXL switches are connected to a single CXL switch. For example, a first memory device is connected to a first CXL switch, a second memory device is connected to a second CXL switch, and the first and second CXL switches are cascaded, with a higher-level CXL switch among the first and second CXL switches connected to a host. Refer specifically to a CXL network architecture shown in FIG. 2, where hosts 0-1 are connected to CXL switch 21, the CXL switch 21 is connected to LD10, LD11, and CXL switch 22, the CXL switch 22 is connected to LD12 and LD13. FIG. 2 shows only a two-level cascade, which is not limiting.

In the above-mentioned memory allocation method, in response to determine a memory device (first memory device) of the host is overloaded, FM selects a memory device with better attributes (second memory device) from many memory devices that are not bound to any host and replaces the first memory device with the second memory device for allocation to the host. Since the host uses the second memory device with better attributes than the first memory device, the problem of overload in the first memory device is fundamentally resolved.

The following detailed description of the memory allocation method provided in the embodiments of the present disclosure is given through specific embodiments.

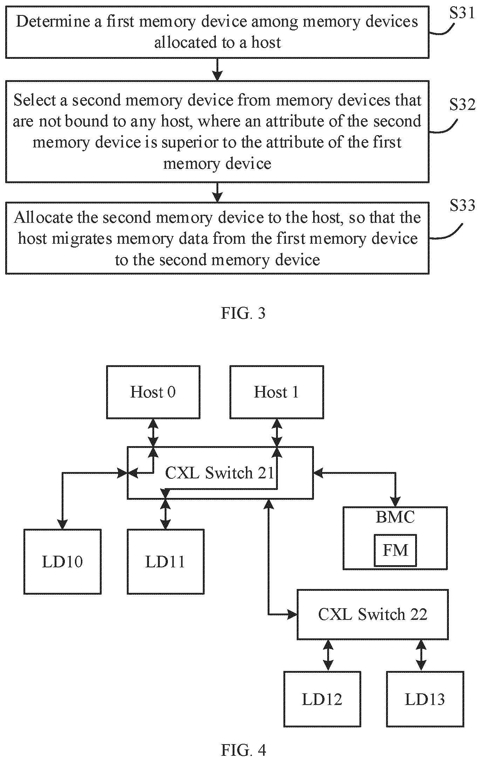

FIG. 3 provides a schematic diagram of the memory allocation method as an example in the present disclosure, applying to FM, including the following processes:

At step S31, determine a first memory device among memory devices allocated to a host, where the first memory device is overloaded.

In the embodiment of the present disclosure, the host may have one or more memory devices, and the first memory device may be any one of these memory devices. Memory devices may be the above SLD, or an LD obtained by dividing MLD. In the embodiment of the present disclosure, memory devices may be Type 3 devices, that is, memory expansion devices. Type 3 devices may be configured to increase capacity and bandwidth of a memory.

The host may detect memory devices allocated to the host, and acquire a dynamic load status and bandwidth information of each memory device allocated to the host through the QOS telemetry function. FM interacts with the host to obtain the dynamic load status and bandwidth information of each memory device, and based on these information, determines the overloaded first memory device.

At step S32, select a second memory device from memory devices that are not bound to any host, where an attribute of the second memory device is superior to the attribute of the first memory device.

In the embodiment of the present disclosure, memory devices that are not bound to any host are idle memory devices, that is, memory devices mounted under a CXL switch connected to the host, and not bound to any host, i.e. LD11 and LD13 in FIG. 2. The attributes of memory devices may include one or more of latency and bandwidth.

In the case of determining that the first memory device is overloaded, FM selects a memory device with attributes superior to the first memory device, that is, the second memory device, from the memory devices mounted under the CXL switch connected to the host and not bound to any host. For example, select a second memory device with lower latency to communicate with the host than the first memory device, or select a second memory device with higher bandwidth to communicate with the host than the first memory device.

At step S33, allocate the second memory device to the host, so that the host migrates memory data from the first memory device to the second memory device.

After determining the second memory device, FM binds the host to the second memory device, realizing the allocation of the second memory device to the host. After binding the host to the second memory device, the host migrates the memory data in the first memory device to the second memory device, completing the memory migration, so that the host may release the first memory device and access the second memory device to read and write memory data.

For example, as shown in FIG. 4, for host 1, LD12 is overloaded, FM selects LD11 with lower latency than LD12, bounds LD11 to host 1, and migrates memory data in LD12 to LD 11. Host 1 may release LD12 and access LD11 to read and write memory data.

By applying the technical solution provided in the embodiment of the present disclosure, in response to determine that one memory device, for example the first memory device, of the host is overloaded, the FM selects a memory device with better attributes from numerous memory devices that are not bound to any host, namely the second memory device. The second memory device is then substituted for the first memory device and allocated to the host. Since the host uses the second memory device, which has better attributes compared to the first memory device, the problem of the first memory device being overloaded is resolved at the root.

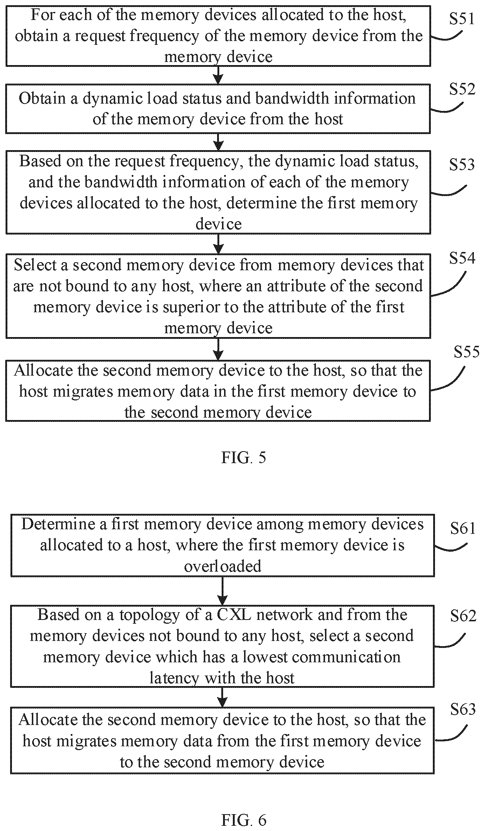

In some embodiments, as shown in FIG. 5, a memory allocation method is further provided, which may include the following processes.

At step S51, for each of the memory devices allocated to the host, obtain a request frequency of the memory device from the memory device.

In the embodiment of the present disclosure, each memory device will record the request frequency of the host to itself. For each memory device allocated to the host, FM obtains the request frequency of the host to the memory device from the memory device.

In some embodiments, each memory device may include a first counter (ReqCnt[LD]) and a second counter CmpCnt[Hist]; the first counter records a difference between the number of memory requests and the number of memory responses, and the second counter records the number of memory requests. The number of memory requests is the number of memory requests received by the memory device from the host, and the number of memory responses is the number of memory responses sent by the memory device to the host. That is, for a memory device, each time it receives a request from the host, the first counter will increase, and each time the memory device sends a response to the host, the first counter will decrease. The first counter reflects an instantaneous "submit" utilization rate, allowing for a quick response to incoming requests, especially when requests are sudden. The information recorded by the second counter is historical request statistics for the host's request to the memory.

Based on the first counter and the second counter, the above step S51 may be: obtain values recorded in the first counter and the second counter of the memory device as the request frequency of the memory device.

Based on this, FM measures the request frequency of memory devices from two dimensions, so that the accuracy of judging the load status of memory devices may be improved.

At step S52, obtain a dynamic load status and bandwidth information of the memory device from the host.

The host may detect the dynamic load status and bandwidth information of each memory device allocated to the host through the QOS telemetry function. FM may program the CCI to obtain the dynamic load status and bandwidth information of each memory device from the host. The dynamic load status may be divided into light load status, optimal load status, medium load status, and severe load status. Both medium load status and severe load status may be regarded as overload status, or severe load status may be regarded as overload status.

FM may also manage SLD, MLD, CXL switches, and memory pool controllers through programming the CCI. Using standardized Application Programming Interfaces (APIs), FM may send commands to memory devices to collect error information, QOS status, and bandwidth information, etc.

In the embodiment of the present disclosure, the execution order of steps S51 and S52 is not limited.

At step S53, based on the request frequency, the dynamic load status, and the bandwidth information of each of the memory devices allocated to the host, determine the first memory device.

In the embodiment of the present disclosure, FM may configure a request frequency threshold, a bandwidth threshold, etc. When the request frequency of a memory device is higher than the request frequency threshold, the bandwidth information is higher than the bandwidth threshold, and the dynamic load status indicates an overload status, FM may consider that the memory device is the overloaded first memory device.

At step S54, select a second memory device from memory devices that are not bound to any host, where an attribute of the second memory device is superior to the attribute of the first memory device. Same as the step S32 above.

At step S55, allocate the second memory device to the host, so that the host migrates memory data in the first memory device to the second memory device. Same as step S33 above.

The technical solution provided in the embodiment of the present disclosure FM cooperates with the host to realize a combined innovation of QOS telemetry technology and memory migration technology. By analyzing multiple indicators in a comprehensive manner, i.e., memory load, bandwidth, and request frequency, the method may select the lowest latency access path and maximize the use of high-bandwidth memory devices, solving the problem, i.e. the overload of a single memory device.

In some examples, as shown in FIG. 6, a memory allocation method is further provided, which may include the following steps.

At step S61, determine a first memory device among memory devices allocated to a host, where the first memory device is overloaded. Same as step S31 above.

At step S62, based on a topology of a CXL network and from the memory devices not bound to any host, select a second memory device which has a lowest communication latency with the host.

In the embodiment of the present disclosure, FM manages the topology of the CXL network, which may reflect a connection relationship between each host and a CXL switch, and a connection relationship between the CXL switch and the memory devices. Based on this topology, FM may determine the idle memory devices and a memory device with the lowest communication latency with the host, and then determine the second memory device.

At step S63, allocate the second memory device to the host, so that the host migrates memory data from the first memory device to the second memory device. Same as step S33 above.

The technical solution provided in the embodiment of the present disclosure combines the topology of the CXL network to better plan a resource pool of a system and achieve the optimization of system resource allocation. In response to determine that solving the problem of the overload of a single memory device, it also achieves the automation and refinement of memory management.

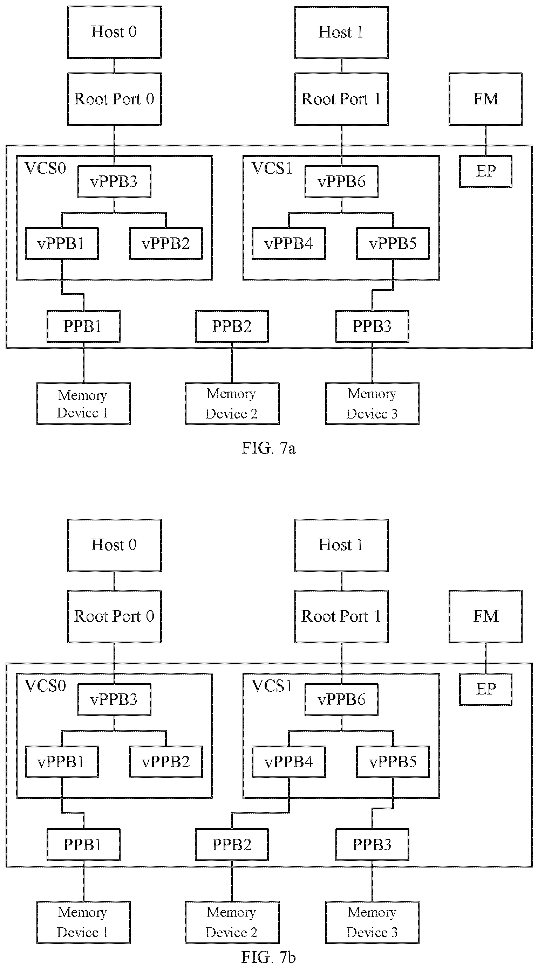

The memory allocation method provided in the embodiment of the present disclosure is explained in combination with the network architecture shown in FIG. 7a and 7b. In FIG. 7a and 7b, root port 0 is connected to host 0, root port 1 is connected to host 1, and EP is a CCI connected to FM. Root port 0, root port 1, and EP are located on a CXL switch. The CXL switch includes two virtual CXL switches (VCSs), namely VCS0 and VCS1. VCS0 includes virtual private periphery buses (vPPBs), such as vPPB1 to vPPB3, and VCS1 includes vPPB4 to vPPB6. In addition, the CXL switch further includes physical private periphery buses (PPBs), such as PPB1 to PPB3.

In FIG. 7a, vPPB1 is bound to PPB1, host 0 may access memory device 1 through vPPB1 and PPB1, and vPPB5 is bound to PPB3, host 1 may access memory device 3 through vPPB5 and PPB3. vPPB2 and vPPB4 are not bound to PPB and are in an unbound state. Memory device 2 is bound to PPB2 on the CXL switch, FM may access memory devices 1 to 3, and may also bind unbound memory device 2 to any unbound vPPB.

In the embodiment of the present disclosure, when memory device 3 bound to host 1 is overloaded, and the attributes of memory device 2 are better than those of memory device 3, memory device 2 is the second memory device. FM sends a binding command to the CXL switch, which instructs to bind vPPB4 to PPB2. Base on the binding command, the CXL switch binds vPPB4 to PPB2, thereby binding memory device 2 to host 1, as shown in FIG. 7b.

After binding memory device 2 to host 1, the CXL switch sends a hot add notification to host 1 and notifies FM of the successful binding. At this point, memory device 2 is ready to be enumerated/configured by host 1.

After binding memory device 2 to host 1, host 1 initiates a device hot add process as follows:
a) A system firmware of host 1 prepares for device hot add.
b) Host 1 generates a PCIe hot-plug interrupt.
c) A bus driver of host 1 performs PCIe a hot add operation to enable CXL.io. This process allocates a base address register (BAR) for the device.
d) A CXL-aware software of host 1 detects a newly bound memory device. The CXI,-aware software may be a CXL bus driver in an operating system, device drivers, or other software entities.
e) The CXI,-aware software of host 1 notifies a memory manager of the operating system (OS) of the newly bound memory device and its attributes, e.g. latency and bandwidth. The memory manager processes the request and adds the new memory device to its allocated memory pool.

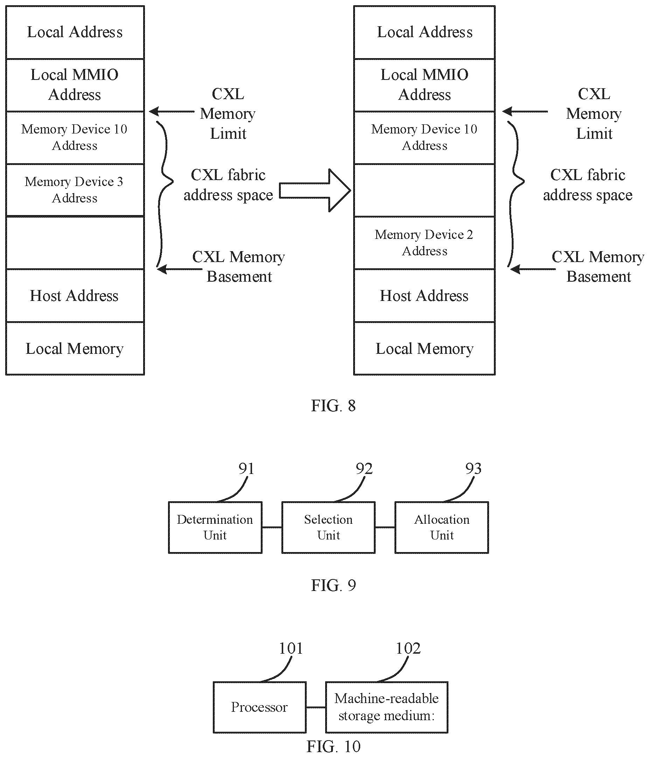

After the completion of hot-plug, host 1 executes memory migration. In the embodiment of the present disclosure, memory migration may be executed before or after memory data copying to ensure memory data in a source location and a target location are consistent during or after memory migration is completed. In the embodiment of the present disclosure, other manners of memory migration may also be applied, which is not limited. The specific memory migration process may include the following two steps.
1) Host 1 migrates memory device 3, originally mapped to a switch memory pool, to memory device 2, as shown in a device migration schematic diagram in FIG. 8. Add an address of memory device 2 is added to a CXL fabric address space in a Host Physical Address (HPA) of host 1, and recover an address of memory device 3.

In the embodiment of the present disclosure, the CXL fabric address space is limited by CXL memory limits (men_limit) and CXL memory basement (men_base). The CXL fabric address space may store addresses of one or more memory devices, e.g., as shown in FIG. 8, an address of memory device 10 (for example only) and the address of memory device 3 are stored. The HPA may further include other addresses, e.g., host local addresses, local MMIO addresses, host addresses, host local memory (Local Mem), etc.

2) Host 1 updates a Host-managed Device memory (HDM) range of the host.

This completes the memory migration and memory reallocation.

In response to determine that the host needs to access a memory device, the HPA is mapped to a Device Physical Address (DPA) through an HDM decoder, and the memory device is accessed through the DPA.

Corresponding to the above memory allocation method, an embodiment of the present disclosure further provides a memory allocation apparatus, as shown in FIG. 9, which is applied to a network manager and includes:
a determination unit 91, configured to determine a first memory device among memory devices allocated toa host, where the first memory device is overloaded;
a selection unit 92, configured to select a second memory device from memory devices not bound to any host, where an attribute of the second memory device is superior to the attribute of the first memory device; and
an allocation unit 93, configured to allocate the second memory device to the host so that the host migrates memory data from the first memory device to the second memory device.

In some implementations, the determination unit 91 may be specifically configured to:
for each of the memory devices allocated to the host,
obtain a request frequency of the memory device from the memory device;
obtain a dynamic load status and bandwidth information of the memory device from the host; and
determine the first memory device based on the request frequency, the dynamic load status, and the bandwidth information of each of the memory devices allocated to the host.

In some embodiments, each of the memory devices includes a first counter and a second counter; the first counter records a difference between a number of memory requests received by the memory device from the host and a number of memory responses sent by the memory device to the host, and the second counter records the number of memory requests;

In a specific manner, the determination unit 91 may be specifically configured to:
obtain values recorded in the first counter and the second counter of the memory device as the request frequency of the memory device.

In some embodiments, the attribute includes one or more of latency and bandwidth.

In some embodiments, the attribute includes the latency;

In a specific manner, the selection unit 92 may be specifically configured to:
select, based on a topology of a CXL network and from the memory devices not bound to any host, a second memory device which has a lowest communication latency with the host.

In some embodiments, the first memory device is connected to a first CXL switch, and the second memory device is connected to a second CXL switch, with the first and second CXL switches cascaded, and a higher-level CXL switch in the first and second CXL switches is connected to the host.

In the technical solution provided in the present disclosure, in response to determine that one memory device (the first memory device) of the host is overloaded, the network manager selects a more superior memory device, namely the second memory device, from the numerous memory devices not bound to any host and replaces the first memory device with the second memory device for allocation to the host. Since the host uses the second memory device with better attributes than the first memory device, the problem of overload in the first memory device is fundamentally resolved.

Corresponding to the above memory allocation method, an embodiment of the present disclosure further provides a network manager, as shown in FIG. 10, including a processor 101 and a machine-readable storage medium 102. The machine-readable storage medium 102 stores machine-executable instructions that prompt the processor 101 to implement any of the above memory allocation methods.

The machine-readable storage medium may include Random Access Memory (RAM) or Non-Volatile Memory (NVM), which have one or more disk storage. Preferably, the machine-readable storage medium may further be a storage apparatus located away from the processor.

The processor mentioned above may be a general-purpose processor, including a Central Processing Unit (CPU), Network Processor (NP), etc.; or a Digital Signal Processor (DSP), Application Specific Integrated Circuit (ASIC), Field-Programmable Gate Array (FPGA), or other programmable logic apparatuses, discrete gates, or transistor logic apparatuses, discrete hardware components.

In another embodiment provided in the present disclosure, a computer-readable storage medium is provided, which stores a computer program that, when executed by the processor, implements any of the above memory allocation methods.

In another embodiment provided in the present disclosure, a computer program product containing instructions is provided, when run on a computer, causes the computer to execute any of the memory allocation methods described in the above embodiments.

In the above embodiments, the implementation may be fully or partially achieved through software, hardware, firmware, or any combination thereof. When implemented through software, it may be achieved fully or partially in the form of a computer program product. The computer program product includes one or more computer instructions. When the computer instructions are loaded and executed on a computer, the process or function described in the embodiments of the present disclosure is fully or partially generated. The computer may be a general-purpose computer, a dedicated computer, a computer network, or other programmable apparatuses. The computer instructions may be stored in a computer-readable storage medium, or transferred from one computer-readable storage medium to another, e.g., from a website, computer, server, or data center to another through wired, e.g.., coaxial cable, fiber optic, digital subscriber line (DSL) or wireless, e.g., infrared, wireless, microwave, etc. means. The computer-readable storage medium may be any available medium accessible by a computer, or a data storage apparatus, e.g., a server or data center that integrates one or more available media. The available media may be magnetic media, (e.g., floppy disks, hard disks, magnetic tapes), optical media (e.g., DVDs), or semiconductor media (e.g., Solid State Disks (SSD)).

It should be noted that in this disclosure, relational terms, e.g., "first" and "second" are only to distinguishing one entity or operation from another, and do not necessarily imply any actual relationship or order between these entities or operations. In addition, the terms "include," "contain," or any other variants are intended to cover non-exclusive inclusion, so that a process, method, item, or apparatus that includes a series of elements includes not only those elements explicitly listed, but also any other elements not explicitly listed, or inherent to that process, method, item, or apparatus. Without further limitations, elements limited by the statement "including a..." do not exclude other identical elements in the process, method, item, or apparatus that includes the elements.

Each memory device in the embodiments may refer to the same or similar parts, and the differences between each embodiment are emphasized. In particular, for the apparatus, network manager, computer-readable storage medium, and computer program product examples, which are fundamentally similar to the method examples, the description is relatively simple, and relevant parts may be referred to in the method example.

The above description is only the preferred example of the present disclosure, and is not intended to limit the scope of the present disclosure. Any modification, equivalent replacement, improvement, etc. made within the principle of the present disclosure is included in the protection scope of the present disclosure.

In the technical solution provided in the present disclosure example, in response to determine that a memory device, considered as first memory device, of the host is overloaded, the network manager selects a more optimal memory device, namely the second memory device, from the many memory devices that have never been bound to any host, and replaces the first memory device with the second memory device, allocating it to the host. Using the second memory device with better properties than the first memory device, the fundamental problem of overloading the first memory device is effectively solved.

## Claims

1. A memory allocation method, performed by a network manager, comprising:
determining (S31, S61) a first memory device among memory devices allocated to a host, wherein the first memory device is overloaded;
selecting (S32, S54) a second memory device from memory devices not bound to any host, wherein an attribute of the second memory device is superior to the attribute of the first memory device; and
allocating (S33, S55, S63) the second memory device to the host, so that the host migrates memory data from the first memory device to the second memory device.

2. The method according to claim 1, wherein determining (S31, S61) the first memory device among the memory devices allocated to the host comprises:
for each of the memory devices allocated to the host,
obtaining (S51) a request frequency of the memory device from the memory device;
obtaining (S52) a dynamic load status and bandwidth information of the memory device from the host; and
determining (S53) the first memory device based on the request frequency, the dynamic load status, and the bandwidth information of each of the memory devices allocated to the host.

3. The method according to claim 2, wherein each of the memory devices comprises a first counter and a second counter, the first counter records a difference between a number of memory requests received by the memory device from the host and a number of memory responses sent by the memory device to the host, and the second counter records the number of memory requests;
wherein, obtaining (S51) the request frequency of the memory device from the memory device comprises:
obtaining values recorded in the first counter and the second counter of the memory device as the request frequency of the memory device.

4. The method according to any one of claims 1 to 3, wherein the attribute comprises one or more of latency and bandwidth.

5. The method according to claim 4, wherein the attribute comprises the latency;
wherein selecting (S32, S54) the second memory device from the memory devices not bound to any host comprises:
selecting (S62), based on a topology of a compute express link, CXL, network and from the memory devices not bound to any host, a second memory device which has a lowest communication latency with the host.

6. The method according to any one of claims 1 to 5, wherein
the first memory device is connected to a first CXL switch,
the second memory device is connected to a second CXL switch,
the first CXL switch and the second CXL switch are cascaded, and a higher-level CXL switch in the first CXL switch and the second CXL switch is connected to the host.

7. A memory allocation apparatus, applied to a network manager, comprising:
a determination unit (91), configured to determine a first memory device among memory devices allocated to a host, wherein the first memory device is overloaded;
a selection unit (92), configured to select a second memory device from memory devices not bound to any host, wherein an attribute of the second memory device is superior to the attribute of the first memory device; and
an allocation unit (93), configured to allocate the second memory device to the host, so that the host migrates memory data from the first memory device to the second memory device.

8. The memory allocation apparatus according to claim 7, wherein the determination unit (91) is specifically configured to:
for each of the memory devices allocated to the host,
obtain a request frequency of the memory device from the memory device;
obtain a dynamic load status and bandwidth information of the memory device from the host; and
determine the first memory device based on the request frequency, the dynamic load status, and the bandwidth information of each of the memory devices allocated to the host.

9. The memory allocation apparatus according to claim 8, wherein
each of the memory devices comprises a first counter and a second counter, the first counter records a difference between a number of memory requests received by the memory device from the host and a number of memory responses sent by the memory device to the host, and the second counter records the number of memory requests;
the determination unit (91) is specifically configured to:
obtain values recorded in the first counter and the second counter of the memory device as the request frequency of the memory device.

10. The memory allocation apparatus according to any one of claims 7 to 9, wherein
the attribute comprises one or more of latency and bandwidth.

11. The memory allocation apparatus according to claim 10, wherein the attribute comprises the latency;
the selection unit (92) is specifically configured to:
select, based on a topology of a compute express link, CXL, network and from the memory devices not bound to any host, a second memory device which has a lowest communication latency with the host.

12. The memory allocation apparatus according to any one of claims 7 to 11, wherein
the first memory device is connected to a first compute express link, CXL, switch, the second memory device is connected to a second CXL switch, the first CXL switch and the second CXL switch are cascaded, and a higher-level CXL switch in the first CXL switch and the second CXL switch is connected to the host.

13. A network manager, comprising a processor (101) and a machine-readable storage medium (102), wherein the machine-readable storage medium (102) stores machine-executable instructions executable by the processor (101), and the processor (101) is prompted by the machine-executable instructions to perform the method according to any one of claims 1 to 6.

14. A computer-readable storage medium, comprising a computer program that, in response to execution by a processor, implements the method according to any one of claims 1 to 6.
